(19) **Europäisches Patentamt**

**European Patent Office**

**Office européen des brevets**

(11) **EP 0 474 304 B1**

(12) **EUROPÄISCHE PATENTSCHRIFT**

(45) Veröffentlichungstag und Bekanntmachung des Hinweises auf die Patenterteilung:
**04.12.1996   Patentblatt 1996/49**

(51) Int Cl.$^6$: **H04N 7/32**

(21) Anmeldenummer: **91202234.0**

(22) Anmeldetag: **03.09.1991**

(54) **Schaltungsanordnung zum Erkennen eines menschlichen Gesichts**

Circuit arrangement for recognizing a human face

Agencement de circuit pour la reconnaissance d'un visage humain

(84) Benannte Vertragsstaaten:
**DE FR GB**

(30) Priorität: **05.09.1990   DE 4028191**

(43) Veröffentlichungstag der Anmeldung:
**11.03.1992   Patentblatt 1992/11**

(73) Patentinhaber:
- **Philips Patentverwaltung GmbH**
  **22335 Hamburg (DE)**
  Benannte Vertragsstaaten:
  **DE**
- **Philips Electronics N.V.**
  **5621 BA Eindhoven (NL)**
  Benannte Vertragsstaaten:
  **FR GB**

(72) Erfinder: **Badiqué, Eric, Dr.**
**W-8500 Nürnberg 10 (DE)**

(74) Vertreter: **Volmer, Georg, Dipl.-Ing. et al**
**Philips Patentverwaltung GmbH,**
**Röntgenstrasse 24**
**22335 Hamburg (DE)**

(56) Entgegenhaltungen:
**EP-A- 0 225 729          WO-A-88/09101**

**Beschreibung**

Die Erfindung bezieht sich auf Schaltungsanordnung zum Erkennen eines menschlichen Gesichts in einer Sequenz von Videobildern mit

ersten Mitteln zur Bildung eines Differenzbildes zweier in Blöcke strukturierten, aufeinanderfolgenden Videobilder, zweiten Mitteln zur Überprüfung jedes Differenzbildes, ob die Summe des Betrages oder einer ganzahligen Potenz des Betrages der Bildpunkte eines Blocks über einer ersten Schwelle liegt und ob die Anzahl der Bildpunkte dieses Blocks, deren Betrag oder ganzahlige Potenz des Betrages über einer zweiten Schwelle liegt, eine vorgegebene Anzahl überschreitet, und
dritten Mitteln zur Erzeugung eines aus Statusbits bestehenden Statusbildes aus einem Differenzbild, bei dem ein Statusbit einen ersten Binärwert für jeden Block eines Differenzbildes aufweist, für den die genannte Überprüfung positiv ausgefallen ist, und bei dem ein Statusbit einen zweiten, zum ersten Binärwert inversen Binärwert für jeden Block eines Differenzbildes aufweist, für den die genannte Überprüfung negativ ausgefallen ist.

Die Wirkungsweise einer Anordnung mit den genannten Eigenschaften ist einem Vortrag zu entnehmen, der auf der Picture Coding Symposium vom 26. bis 28. März 1990 in Cambridge, Massachusetts, USA gehalten wurde (vgl. Eric Badiqué: Knowledge-based Facial Area Recognition and Improved Coding in a CCITT-Compatible Low-Bitrate Video-Codec. Proceedings of Picture Coding Symposium 90, Cambridge, Massachusetts).

Eine vergleichbare Schaltungsanordnung ist in der EP-A2-0 330 455 beschrieben. Auch sie wird zum Beispiel bei Bildtelefonen verwendet. Der Grund, derartige Schaltungsanordungen gerade bei Bildtelefonen mit niedriger Ubertragungsbitrate (z.B. 64 kBit/s) zu verwenden ist der, daß im Laufe eines Gesprächs die Augen eines Sprechers hauptsächlich das Gesicht und besonders die Augen und den Mund des anderen Sprechers verfolgen und diese Tatsache sich dazu nutzen läßt, ohne Erhöhung der Übertragungsbitrate eine subjektive Verbesserung der Bildqualität zu erreichen. Eine solche Verbesserung stellt sich nämlich genau dann ein, wenn die Augen- und Mundpartien eines Gesichts auf Kosten anderer Bereiche des Bildes mit einer höheren Genauigkeit, - d.h. mit mehr Bits - codiert werden als anderen Partien. Die Nutzung dieses Effektes ist jedoch nur möglich, wenn zuvor erkannt worden ist, ob in einer Sequenz von Videobildern ein Gesicht vorhanden sein kann oder nicht.

Die in der EP-A2-0 330 455 beschriebene Anordnung geht zu dem genannten Zweck von der Differenz zweier aufeinanderfolgender Videobilder aus. Im Differenzbild erscheinen nur von Null verschiedene Signalanteile, wenn die Bildsequenz bewegte Objekte enthält. In der zitierten Patentanmeldung wird die Folge der Differenzbilder in einer Weise nachverarbeitet, die Erkennungsfehler wahrscheinlich macht.

Aus der WO-8809101 AI ist noch ein Verfahren zur Videobildverarbeitung bekannt, bei dem Daten, die zu einem menschlichen Kopf gehören, ermittelt werden. Es werden hierbei zwischen aufeinanderfolgenden Videobildern Differenzbilder erzeugt, die mit einer Helligkeitschwelle verglichen werden und die in eine rechteckförmige Fläche eingepaßt werden, welche alle zu einem Kopf gehörenden Daten enthalten.

Der Erfindung liegt die Aufgabe zugrunde, eine Schaltungsanordnung anzugeben, bei der die Entscheidung, ob eine Sequenz von Videobildern ein menschliches Gesicht enthält oder nicht, wesentlich zuverlässiger gefällt wird als bei einer Anordnung nach dem Stand der Technik.

Die Aufgabe wird mit einer Schaltungsanordnung der eingangs genannten Art dadurch gelöst,

daß vierte Mittel zur Ermittlung der Anzahl der Statusbits mit dem ersten Binärwert einer Zeile oder einer Spalte vorgesehen sind, wobei die ermittelte Anzahl der Statusbits durch eine Merkmalsfunktion Mf(k) darstellbar ist und k eine Zeile oder Spalte angibt,
daß fünfte Mittel

- zur Berechnung eines Faltungsintegrals

$$\sum_{k=1}^{n} \text{Mf}(k) \ * \ h(k)$$

vorgesehen sind, wobei n die Anzahl der Zeilen oder Spalten ist und h(k) eine Hilfsfunktion ist, die so gewählt worden ist, daß das Faltungsintegral einen maximalen Wert annimmt, wenn das Muster der Merkmalsfunktion die größte Ähnlichkeit mit einer menschlichen Silhouette aufweist, und
- zur Abgabe eines Erkennungssignals vorgesehen sind, wenn der durch das Faltungsintegral gebildete Wert über einer weiteren Schwelle liegt, und

daß sechste Mittel

- zur Ermittlung des Schwerpunktes der Statusbits mit dem ersten Binärwert innerhalb jeder Zeile,
- zur Bestimmung der vertikalen Zentralachse durch Mittelung der Adressen der ermittelten Schwerpunkte,
- zur Bestimmung der Adresse der ersten Zeile mit einem einen ersten Binärwert aufweisenden Statusbit als oberster Punkt eines Kopfes, der als Spaltenadresse die Adresse der vertikalen Zentralachse erhält, und
- zur Bildung einer Fläche im Videobild als Gesichtsfläche nach Abgabe eines Erkennungssignals vorgesehen sind.

Mit der Festlegung einer Gesichtsfläche im Statusbild ist ein menschliches Gesicht grob erkannt. Die zuverlässige Festlegung einer Gesichtsfläche setzt jedoch das Ermitteln eines Statusbildes voraus, daß mit möglichst hoher Wahrscheinlichkeit einen menschlichen Kopf mit Schulter darstellt.

Zur weiteren Erhöhung dieser Wahrscheinlichkeit ist eine örtliche Filterung beziehungsweise eine zeitliche Glättung des Statusbildes vorgesehen.

Für den gleichen Zweck sind weiterhin zweite Filtermittel vorgesehen, mit denen die Größe der im Statusbild erscheinenden und zusammenhängenen Bereiche ermittelt wird. Unterscheidet sich der größte Bereich nicht wesentlich vom zweitgrößten Bereich, so wird in einem solchen Falle mit hoher Wahrscheinlichkeit nicht das Abbild eines menschlichen Kopfes mit Schulter vorliegen. Durch ein entsprechendes Signal wird dieser Fall angezeigt; alle weiteren Maßnahmen zum Erkennen eines Gesichtes unterbleiben dann.

Nach der Ermittlung der Gesichtsfläche werden die Bildpunkte weiter untersucht, die in die Fläche eines Videobildes fallen, der aus allen Blöcken besteht, die die Gesichtsfläche des Statusbildes ausmachen. Damit ist die weitere Untersuchung auf ein Bruchteil des gesamten Videobildes eingeschränkt und damit weniger aufwendig.

Dieser Teil des Videobildes wird nun in Regionen zerlegt. Diese Regionen sind zusammenhängende Bereiche des Videobildes, deren Bildpunkte alle der gleichen Klasse von Bildpunktdaten angehören. Eine solche Klasseneinteilung kann z.B. durch Einteilung aller vorkommenden Grauwerte oder aller vorkommenden Farbwerte in disjunkte Teilmengen erreicht werden. Eine Einteilung nach der Bewegungsintensität ist ebenfalls möglich.

Sinn dieser Maßnahmen ist der, daß Erkennen von Mund und Augen eines Menschen innerhalb des untersuchten Teiles des Videobildes vorzubereiten. Zu diesem werden auch die Schwerpunkte der ermittelten Bereiche bestimmt. Sodann werden die Entfernungen von jeweils drei Schwerpunkten (Tripel) bestimmt und diese Entfernungen und die Lage der Tripel mit Modelldaten verglichen. Ein Tripel, das z.B. am Rande der untersuchten Fläche liegt, kann nicht dem Auge und dem Mund eines Menschen entsprechen; ebenso wenig ein Tripel, dessen Abstandsverhältnisse wesentlich von 1 abweichen. Ist für ein Tripel die Prüfung positiv ausgefallen, erfolgt eine Bewertung nach mehreren Kriterien nämlich danach, wie das Tripel relativ zur vertikalen Zentralachse liegt (geometrisches Kriterium), welche Farbwerte die Regionen und deren Umgebung (farbliches Kriterium) haben oder welche Bewegungsintensität (dynamisches Kriterium) zu ihnen gehört.

Stimmen zwei nacheinander bestimmte Tripel höchster Bewertung innerhalb gewisser Toleranzgrenzen überein, so kann mit sehr großer Sicherheit auf das Vorhandensein eines menschlichen Gesichtes geschlossen werden. Es werden dann nach Modelldaten alle Bildpunkte bestimmt, die zu dem Gesicht gehören könnten und - im Falle der Verwendung in einem Bildtelefon - genauer kodiert als alle Punkte außerhalb des Gesichtes.

Anhand der Figuren und eines Ausführungsbeispiels soll die Erfindung näher erläutert werden.

Es zeigen:

Fig. 1 ein Prinzipschaltbild einer Anordnung mit erfindungsgemäßen Merkmalen,
Fig. 2 einen Teil der Gesamtanordnung zur Bestimmung des sogenannten Statusbildes,
Fig. 3 bis Fig. 5 Filter zur Filterung des Statusbildes,
Fig. 6 einen Teil der Gesamtanordnung zur Bestimmung einer sogenannten Merkmalsfunktion und zur Bestimmung der Zentralachse der im Statusbild abgebildeten Objekte,
Fig. 7 einen Teil der Gesamtanordnung zur Faltung der Merkmalsfunktion und zur Plazierung einer rechteckigen Gesichtsfläche im Bereich des im Statusbild vermuteten Gesichtes,
Fig. 8 einen Teil der Gesamtanordnung zur Aufteilung eines Farbvideobildes in Regionen mit unterschiedlichen Farbwerten,
Fig. 9 einen Teil der Gesamtanordnung zur Suche von Augenund Mundbereichen eines Menschen und
Fig. 10 eine menschliche Silhouette zur Erläuterung der geometrischen Verhältnisse zwischen Augen und Mund.

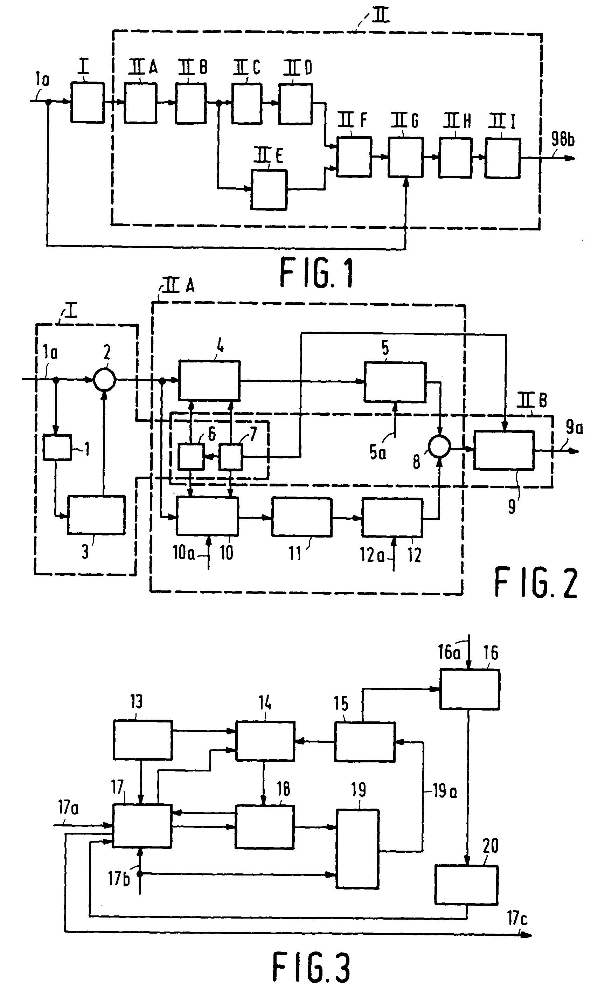

Im prinzipschaltbild nach Fig. 1 wird der Schaltung auf einer Leitung la das Videosignal einer Kamera zugeführt und durch eine Einheit I nach Blöcken strukturiert, die jeweils aus 8 x 8 = 64 Bildpunkten bestehen. Die Bildpunktdaten bestehen aus Luminanzdaten, durch Y symbolisiert, und aus Chrominanzdaten, durch U und V symbolisiert. Das gesamte Bild enthält 288 Zeilen und 352 Spalten, also 101 376 Bildpunkte, wobei Chrominanzdaten nur für jeden zweiten Bildpunkt vorgesehen sind. Bei einer Strukturierung nach 8 x 8-Blöcken ergeben sich insgesamt 36 x 44 = 1 584 Blöcke, deren geometrische Lage in einem dargestellten Videobild durch die Angabe einer Adresse eindeutig gekennzeichnet ist. Gleiches gilt für die Bildpunkte. Die Adressen sind also zu Koordinatenangaben gleichwertig. Bei der weiter unten erwähnten Markierung, Kennzeichnung oder Auswahl von Blöcken, Bildpunktmengen oder besonderen Bildpunkten (z.B. "Schwerpunkte" siehe weiter unten) ist immer gemeint, daß dieser Vorgang durch Zusatzangaben zu den Adressen dieser Größen erfolgt, die dann gemeinsam in - meistens nicht ausdrücklich erwähnten - Speichern abgelegt werden. Ebenfalls nicht ausdrücklich erwähnt sind Takte für getaktete Bausteine, Takt- und andere Steuerleitungen, da der Fachmann deren Notwendigkeit ohne weiteres erkennt und die Ergänzungen vornehmen kann.

Die Einheit I bildet - wie Fig. 2 genauer zeigt - außerdem mit Hilfe eines Verzögerungsgliedes 1, eines Bildspeichers 3 und eines Subtrahierers 2 die Differenz der Bildpunktdaten zweier aufeinanderfolgender Videobilder, abkürzend Differenzbild genannt. Die Strukturierung nach Blöcken erfolgt mit einem Blockadressengenerator 7 und die Adressierung der Bildpunkte eines Blocks durch einen Bildpunktadressengenerator 6, der mit dem Blockadressengenerator 7 gekoppelt ist. Mit den Adressengeneratoren 6 und 7 ist nun das Differenzbild blockweise und bildpunktweise ansprechbar.

Die Einheit IIA bildet zunächst den Betrag der Datendifferenzen aller Bildpunkte eines Blocks zweier aufeinanderfolgender Videobilder. Dieser Betrag ist im vorliegenden Beispiel die "Norm eines Bildpunktes" des Differenzbildes; andere Normen wären z.B. ganzzahlige Potenzen des Betrages. Die Beträge werden aufsummiert, wobei die Summe über alle Bildpunkte eines Blocks läuft und der Wert dieser Summe mit einer ersten Schwelle T1 verglichen wird. Einzelheiten sind wiederum der Fig. 2 zu entnehmen, und zwar dem Teil mit dem Bezugzeichen IIA. Die Einheit 4 summiert die Beträge der Bildpunkte, die Einheit 5 vergleicht den Summenwert mit der Schwelle T1 und gibt eine binäre Eins ab, wenn dieser Summenwert über der Schwelle T1 liegt. Im Beispiel hat die Schwelle T1 den Wert 10. Dieser Schwellwert hängt vom Typ der verwendeten Kamera ab und ist - wie alle weiteren Schwellen auch - ein Parameter des Gesamtsystems, der im Einzelfall zu optimieren ist. Im Beispiel wurde eine handelsübliche CCD-Kamera verwendet.

Die Einheit 10 der übergeordneten Einheit IIA bildet den Betrag der Bildpunkte eines Blocks, vergleicht diesen Betrag sofort mit einer zweiten Schwelle T2, die den Wert 4 hat. Liegt der Betrag dieses Punktes über der Schwelle T2, wird ein Zähler 11 durch einen Impuls der Einheit 10 weitergestellt. Der Stand dieses Zählers wird einer Vergleichseinheit 12 zugeführt, die ebenfalls eine binäre Eins abgibt, wenn der Zähler 11 den Stand 40 überschreitet. Die Werte der Schwellen werden den Einheiten 5, 10 und 12 über Leitungen 5a, 10a und 12a zugeführt.

Die Ausgangssignale der Einheiten 5 und 12 werden durch ein UND-Gatter 8 verknüpft und dessen Ausgangssignal wird einer Abbildungseinheit 9 der übergeordneten Einheit IIB der Fig. 1 bzw. Fig. 2 übergeben.

Diese Einheit 9 bildet die 1 584 Blöcke eines Differenzbildes auf einzelne Bits - hier Statusbits genannt - ab, d.h., unter der Adresse eines Blocks wird in der Einheit 9 eine binäre Eins (erster Binärwert) abgespeichert, wenn das Ausgangssignal des UND-Gatters 8 diesen Wert annimmt. Anderenfalls wird eine binäre Null (zweiter Binärwert) abgespeichert. Die Statusbits werden auf einer Leitung 9a weitergeleitet.

Die Gesamtheit der Statusbits der Blöcke eines Differenzbildes wird hier Statusbild genannt. An der Verteilung der Einsen im Statusbild ist zu erkennen, an welchen Stellen (eine solche Stelle ist durch die Angabe der Blockadresse mit der Genauigkeit einer Blockgröße festgelegt) zweier aufeinanderfolgender Videobilder signifikante Veränderungen aufgetreten sind. Ursache solcher Veränderungen sind bewegte Objekte, Rauschen oder plötzlich veränderte Lichtverhältnisse in den mit der Kamera aufgenommenen Szenen. Da im vorliegenden Fall jedoch nach einem menschlichen Gesicht - oder zunächst nach einer Kopf-Schulter-Szene - gesucht werden soll, sind Veränderungen, die nicht auf der Bewegung von Kopf und Schultern beruhen, uninteressant. Sie werden durch Filter aus dem Statusbild nach Möglichkeit entfernt. Diese Filter sind Bestandteile der Einheit IIB in Fig. 1. Die Wirkung dieser Filter läuft darauf hinaus, nach bestimmten Kriterien ausgewählte Statusbits des Statusbildes zu invertieren.

Fig. 3 zeigt ein Flächenfilter, mit dem Einsen im Statusbild gelöscht werden durch Invertierung, wenn sie ungenügend große Flächenstücke bilden. Über eine Ausgangsleitung 9a der Einheit IIB werden die Statusbits einer Einheit 17 über eine Leitung 17a, die mit der Leitung 9a verbunden ist, zugeführt. Die Blockadressen, die identisch mit den Adressen derjenigen Statusbits sind, auf die die Blöcke abgebildet worden sind, werden von einem Adressengenerator 13 erzeugt. Die Einheit 17 prüft dann, ob die in ihren Speichern abgelegten Statusbits den Wert 1 haben oder nicht. Wird die Frage bei einem aktuellen Statusbit bejaht, generiert eine Einheit 14 eine Adresse der acht zu diesem aktuellen Statusbit benachbarten Statusbits, gibt diese an eine Einheit 18 weiter, die daraufhin das zugehörige Statusbit aus der Einheit 17 übernimmt und einer Einheit 19 zuführt. Die Einheit 19 vergleicht den Wert dieses Statusbits mit dem Wert 1 (dieser Wert liegt auf einer Leitung 17b an) und stellt im bejahenden Fall über eine Leitung 19a einen Zähler einer Einheit 15 um eine Zähleinheit weiter. Die Einheit 15 gibt sodann einen Impuls an die Einheit 14 zur Erzeugung der nächsten Nachbaradresse ab. Ist nach Anfragen der Werte sämtlicher zum ersten Statusbit benachbarten Statusbits der Stand des Zählers der Einheit 15 nicht größer als drei, so gibt ein Komparator 16 ein Signal an einen steuerbaren Inverter 20 ab, der das aktuelle Statusbit in der Einheit 17 invertiert. In allen anderen Fällen werden die Bits nicht invertiert weitergeleitet. Die ganzzahlige Schranke mit dem Wert 3 wird dem Komparator 16 über eine Leitung 16a zugeführt. Nach Bearbeitung des gesamten Statusbildes, werden die Statusbits auf einer Leitung 17c weitergeleitet.

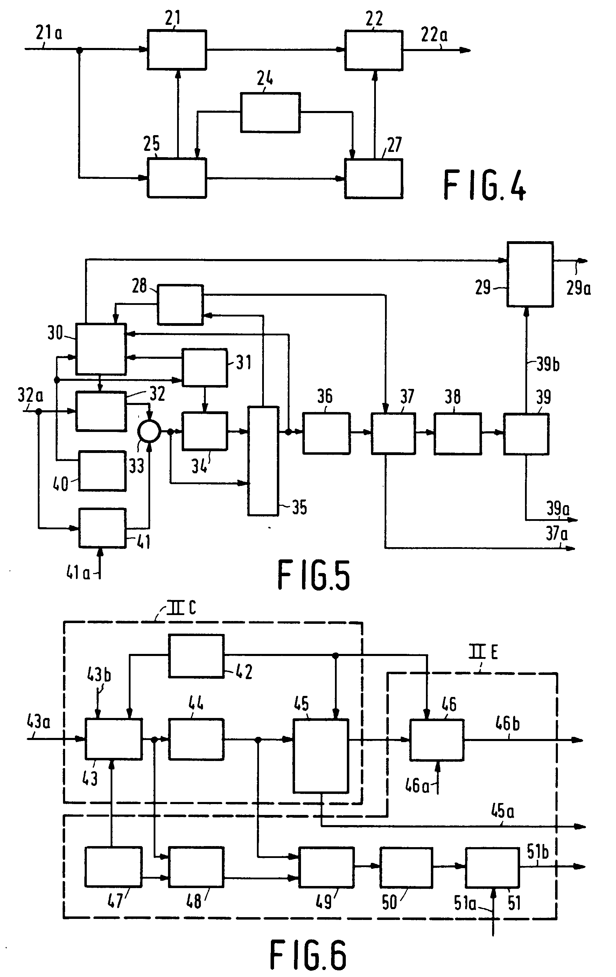

Eine weitere Filterung der Statusbilder wird mit der Glättungsvorrichtung nach Fig. 4 vorgenommen, da die Ausgangsleitung 17c mit einer Eingangsleitung 21a verbunden ist. Die Glättungsvorrichtung besteht aus einem ersten Statusbildspeicher 25 sowie einem darauffolgenden zweiten Statusbildspeicher 27.

Beide Statusbildspeicher 25 und 27 werden von einem Blockadressengenerator 24 angesteuert, durch den aus beiden Speichern die Statusbits zweier aufeinanderfolgender Statusbilder ausgelesen werden, die die gleichen Adressen haben. Die aus dem Speicher 25 ausgelesenen Statusbits werden einem Eingang eines ODER-Gatters 21 und die aus dem Speicher 27 ausgelesenen Statusbits einem Eingang eines ODER-Gatters 22 zugeführt. Die unverzögerten Statusbits sind an den zweiten Eingang des Gatters 21 gelegt, dessen Ausgang mit dem zweiten Eingang des Gatters 22 verbunden ist. Die Statusbits des auf die beschriebene Weise zeitlich geglätteten Statusbildes werden auf einer Ausgangsleitung 22a weitergeleitet.

Durch die ODER-Gatter 21 und 22 werden einander entspre chende Statusbits (d.h. Statusbits mit gleicher Adresse) von drei aufeinanderfolgenden Statusbildern logisch durch eine Disjunktion miteinander verknüpft. Durch die Disjunktion werden statistische Schwankungen, die sich in unterschiedlicher Verteilung von Nullen und Einsen in aufeinanderfolgenden Statusbildern bemerkbar machen zu Gunsten einer gleichmäßigen Verteilung von Einsen beseitigt.

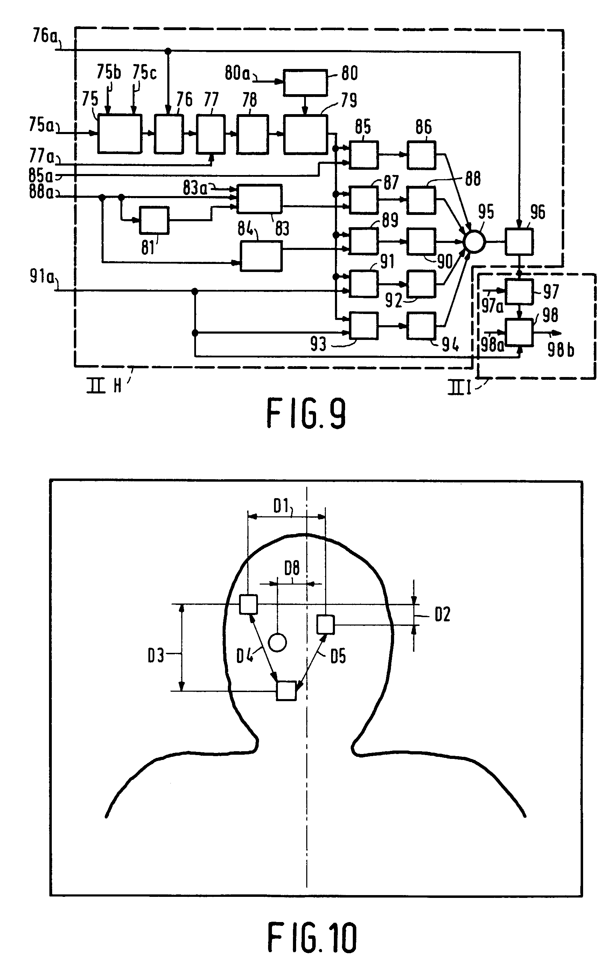

Eine weitere Filterung der Statusbilder wird durch die in Fig. 5 abgebildete Filterschaltung vorgenommen. Die Schaltung zählt die zusammenhängenden Bereiche von Einsen, die in einem Statusbild vorkommen, und ermittelt deren Größe. Jeder Bereich bekommt zur späteren Identifizierung eine Markierungsziffer zugeordnet. Gibt es mehr als zwei solcher Bereiche, werden ihre Größenverhältnisse überprüft. Hat der zweitgrößte Bereich eine Größe, die 20% der Größe des größten Bereichs übertrifft, wird davon ausgegangen, daß das Statusbild keine Silhouette enthalten kann, wie sie zum Beispiel Fig. 10 zeigt. Ein angeschlossener (nicht gezeigter) Coder bekommt dann die Meldung, weiterhin eine Standardcodierung zu verwenden.

Im einzelnen zeigt Fig. 5 ein Markierungsregister 30, in dem unter Statusbitadressen, die von einem Generator 40 erzeugt werden, Bereichsmarkierungen abgespeichert werden, d.h., unter jeder Adresse wird im Laufe der Analyse eine Zahl abgespeichert, die die Nummer (angefangen bei Eins) des Bereichs angibt, zu der ein Punkt eines Statusbildes gehört. Zu Beginn der Analyse eines Statusbildes sind alle Speicherstellen des Markierungsregisters 30 mit dem Wert 0 überschrieben. über eine Leitung 32a, die mit der Leitung 22a verbunden ist, werden die Statusbits, deren Adresse der Generator 40 erzeugt, zwei Vergleichsschaltungen 32 und 41 zugeführt. Die Vergleichsschaltung 41 prüft, ob es sich bei dem Statusbit um eine Eins handelt und die Vergleichsschaltung 32 prüft, ob die zugehörige Stelle (Adresse) noch nicht markiert worden ist. Handelt es sich um eine Eins und ist die Stelle noch nicht markiert worden, geben beide Schaltungen in ihren Ausgängen eine Eins ab, die durch ein UND-Gatter 33 verknüpft werden. Der Ausgang des Gatters 33 ist mit einer Einheit 34 verbunden, die von einer Einheit 31 die aktuelle Adresse (die gerade von der Einheit 40 erzeugt wurde) erhält, sowie deren sämtliche Nachbaradressen.

Liegt das Ausgangssignal des UND-Gatters 33 auf Eins, liest die Einheit 34 aus einem in Fig. 5 nicht gezeigten Statusspeicher alle Statusbits aus, deren Adressen sie von der Einheit 31 bekommen hat. Die zugehörigen Statusbits werden dann einem Komparator 35 zugeführt, dessen einer Eingang mit dem Ausgang des UND-Gatters 33 verbunden ist und der die Werte dieser Statusbits mit dem Wert des aktuellen Statusbits vergleicht.

Die von der Einheit 31 erzeugten Adressen werden ebenfalls dem Markierungsregister zugeführt. Hat eines der zu diesen Adressen gehörigen Statusbits den Wert 1, liegt also ein Ausgangssignal des Komparators 35 auf Eins, so wird unter diesen Adressen die Bereichsmarkierung abgelegt, die ein Markierungsgenerator 28 erzeugt.

Haben alle zu dem aktuellen Statusbit benachbarten und noch nicht markierten Statusbits den Wert 0, so gibt der Komparator 35 ein Signal an den Markierungsgenerator 28 ab, der daraufhin die Bereichsmarkierung um eine Einheit heraufsetzt, denn in diesem Fall gibt es keine Statusbits mehr, die zu den bisher erfaßten Bereichen gehören.

Ein Zähler 36, der an den Komparator 35 gekoppelt ist, zählt die Einsen, die zu dem gerade erfaßten Bereich gehören. Die Gesamtzahl der zu einem Bereich gehörigen Einsen (Größe dieses Bereiches) wird zusammen mit der vom Markierungsgenerator 28 gelieferten Bereichsmarkierung im Speicher 37 abgespeichert und über eine Leitung 37a nachfolgenden Einheiten zur Verfügung gestellt. Sind alle Punkte des Statusbildes einmal erfaßt worden, ordnet eine Einheit 38 die ermittelten Bereiche ihrer Größe nach. Ein nachgeschalteter Vergleicher 39 stellt fest, ob der zweitgrößte Bereich größer als das 0,2-fache der Größe des größten Bereichs ist. Falls ja, wird ein Signal über eine Leitung 39a an einen nicht gezeigten Coder abgegeben, der dann mit der Standardcodierung fortfährt. Fällt die Abfrage negativ aus, wird die Markierungsziffer des größten Bereichs über eine Leitung 39b an eine Korrekturschaltung 29 gegeben. Diese Korrekturschaltung 29 liest den Inhalt des Markierungsregisters 30 aus, ersetzt die mit der Markierung des größten Bereichs übereinstimmenden Markierungen durch Eins und alle anderen Markierungen durch Null. Das auf diese Weise gefilterte Statusbild wird bitweise über eine Leitung 29a nachgeschalteten Einheiten zur Weiterverarbeitung übergeben.

Nach der Erzeugung eines von Störungen weitgehend befreiten Statusbildes, in dem ein Gesicht vermutet werden kann, wird dieses von einer Einheit IIC nach Fig. 1 in eine eindimensionale Merkmalsfunktion transformiert. Im Beispiel wird die Zahl der Statusbits mit dem Wert 1 innerhalb einer jeden Zeile ermittelt. Diese Anzahl als Funktion der Zeilenzahl, angefangen bei der ersten (obersten) Zeile bis zur 36-sten (untersten) Zeile, stellt die Merkmalsfunktion Mf (k) dar, mit k = 1, 2...36. Zur Ermittlung dieser Funktion dienen die mit IIC in Fig. 6 abgegrenzten Bausteine. Die Zeilenadressen (Zeilenzahlen) werden von einem Generator 42 erzeugt, die Spaltenadressen, die die Lage eines Statusbits innerhalb einer Zeile angeben, werden durch einen Generator 47 erzeugt. Eine Einheit 43, der über eine Leitung 43b eine binäre Eins für Vergleichszwecke zugeführt wird, bekommt über eine Leitung 43a, die mit der Leitung 29a verbunden ist, dasjenige Statusbit, das zu der von den Generatoren 42 und 47 erzeugten Gesamtadresse gehört. Sie vergleicht das Ankommen des Statusbits einer Zeile mit dem auf Leitung 43b zugeführten Binärwert und gibt bei Übereinstimmung einen Zählimpuls an einen nachgeschalteten Zähler 44 weiter. Am Ende einer Zeile wird dessen Stand unter der Zeilenadresse in einem Funktionsspeicher 45 abgespeichert. Die Gesamtheit des Speicherinhaltes stellt die Merkmalsfunktion dar. Sie wird über eine Leitung 45a weitergeleitet.

Die in Fig. 1 angegebene Einheit IIE ermittelt den Schwer- oder Mittelpunkt der Einsen einer Zeile, d.h., diejenige Adresse, die sich nach Bildung des arithmetischen Mittels aller jener Adressen einer Zeile ergibt unter denen im Statusbild eine binäre Eins abgespeichert ist. Diese Angaben werden später für folgende Zwecke benötigt: Zur Ermittlung einer Zentralachse (genähert die Symmetrieachse), einer Silhouette nach Fig. 10 und zur Ermittlung des obersten Punktes des Kopfes.

Wird nämlich bei der Schwerpunktsbestimmung für alle Zeilen, die keine binären Einsen enthalten, dem Schwerpunkt die Adresse 0 zugeordnet, so ergibt sich der oberste Punkt eines Kopfes als der oberste Schwerpunkt mit einer von Null verschiedenen Adresse.

Die Spalten-Adressen des Generators 47 werden in einer Einheit 48 dann eingelesen, wenn der Ausgang der Einheit 43 anzeigt, daß unter der Gesamtadresse eine binäre Eins abgespeichert ist. Die Einheit 48 bildet die Summe aller eingelesenen Adressen, gibt diese Summe an eine Einheit 49 weiter, die die Anzahl der Summanden vom Zähler 44 erhält und aus beiden Größen eine mittlere Adresse bildet, hier Schwerpunkt einer Zeile genannt. Die Schwerpunktadressen werden in einer Einheit 50 aufsummiert, und durch eine Einheit 51 durch die Anzahl der Summanden dividiert, die die Einheit 51 über eine Leitung 51a erhält. Das Ergebnis ist die horizontale Adresse der gesuchten Zentralachse, die senkrecht durch das Statusbild läuft. Die Angabe der horizontalen Adresse (Koordinate) charakterisiert daher die Zentralachse eindeutig. Diese Angabe wird über eine Leitung 51b weitergeleitet.

Die Koordinaten über den obersten Punkt des Kopfes wird - äquivalent zu den oben gemachten Angaben - aus der Merkmalsfunktion hergeleitet. Die Horizontaladresse dieses Punktes ist identisch mit der horizontalen Adresse der Zentralachse und seine vertikale Adresse ist die erste Zeilenadresse, ab der die Merkmalsfunktion einen von Null verschiedenen Wert annimmt. Diese Adresse wird durch eine Einheit 46 bestimmt, der über eine Leitung 46a die Vergleichsnull zugeführt wird. Das Ergebnis wird über eine Leitung 46b weitergeleitet.

Die Merkmalsfunktion, übertragen über die Leitung 45a und eine Leitung 52a, wird durch ein Median-Filter 52 von evtl. vorhandenen Störspitzen befreit. Das Median-Filter ersetzt von jeweils drei aufeinanderfolgenden Werten den zweiten Funktionswert durch einen Wert, der zwischen dem kleinsten und dem größten aller drei Funktionswerte liegt.

Durch eine Einheit IID nach Fig. 1 wird die Merkmalsfunktion normiert und mit einer Hilfsfunktion h gefaltet, d.h., es wird die zum Faltungsintegral proportionale Summe gebildet. Die Hilfsfunktion h ist so "trainiert" worden,

$$\sum_{i=1}^{36} Mf(i) * h(i) \qquad\qquad (1)$$

daß ihr Wert des Faltungsintegrals mit hier nicht näher erläuterten Mustern von Merkmalsfunktionen den Wert 1 und für bestimmte andere Muster den Wert -1 annmimmt. Den Wert -1 nimmt das Faltungsintegral für Muster an, die mit der in Fig. 10 gezeigten Silhouette die geringste Ähnlichkeit haben und den Wert 1, wenn die Ähnlichkeit am größten ist.

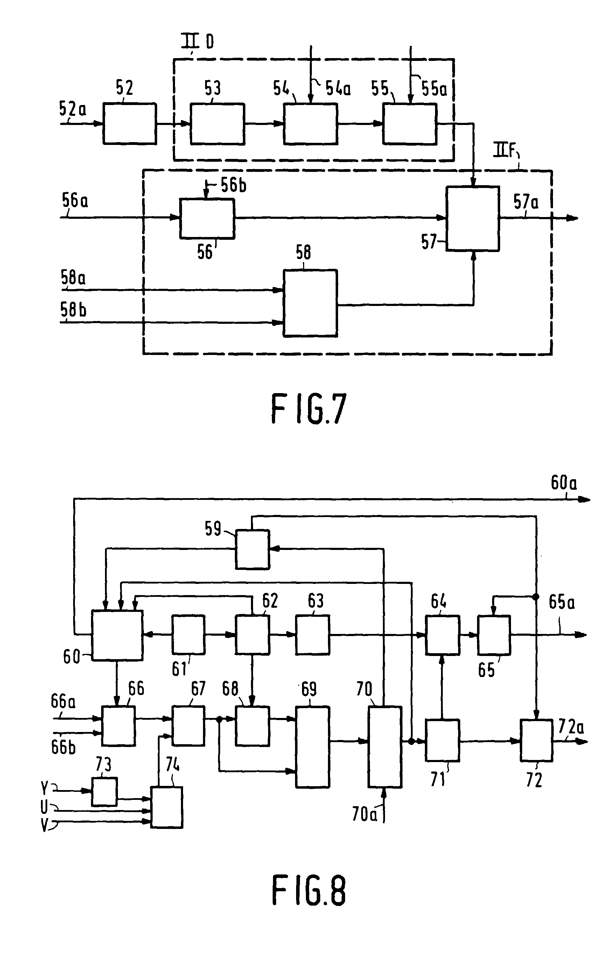

In Fig. 7 ist Funktionsblock IID genauer gekennzeichnet. Eine Einheit 53 normiert die Merkmalsfunktion, d.h. im Beispiel, dividiert alle Werte durch ihr Maximum, so daß die Werte der normierten Funktion zwischen Null und Eins liegen. Die nachgeschaltete Einheit 54 bildet die in Formelzeile (1) angegebene Summe, wobei die Werte der Hilfsfunktion h der Einheit 54 über eine Leitung 54a zugeführt werden. Ein Vergleicher 55 vergleicht den Summenwert mit einer Schwelle auf einer Leitung 55a. Als günstig hat sich der Schwellenwert 0,75 erwiesen. Ist der Summenwert kleiner als 0,75 wird die Analyse abgebrochen. Andernfalls gibt der Vergleicher 55 ein Signal an eine Einheit 57 ab, die mit Hilfe ihrer Eingangssignale die Adressen einer rechteckförmigen Region (Gesichtsfläche) berechnet, in der das Gesicht liegen könnte. Zu den Eingangssignalen der Einheit 57 gehört das Ausgangssignal einer Einheit 56, die über die Größe des zu markierenden Rechtecks entscheidet. Auf der Basis von 8 x 8-Blöcken haben sich folgende drei Rechteckgrößen als ausreichend erwiesen: 8 x 12, 12 x 18 und 16 x 24. Die Zahlen bedeuten Adressendifferenzen, also Strecken in Einheiten der Seitenlänge eines 8 x 8-Blocks. Die Einheit 57 berechnet die Adressen der Fläche im Videobild, die der Gesichtsfläche entspricht.

Zwischen diesen drei Größen wählt die Einheit 56 eine aus.

Als Hilfsmittel stehen ihr dabei das über die Leitung 37a und eine Leitung 56a zugeführte Ausgangssignal der Einheit 37 zur Verfügung. Die drei Größen werden der Einheit 56 über eine Leitung 56b zugeführt. Zu den weiteren Eingangsdaten der Einheit 57 gehört das Ausgangssignal einer Einheit 58, die über eine Leitung 58a die vertikale Koordinate des obersten Kopfpunktes von der Einheit 46 erhält und über eine Leitung 58b die Koordinate der vertikalen Zentralachse erhält. Die Leitung 58a ist mit der Leitung 46b verbunden, während die Leitung 58b mit der Leitung 51b verbunden ist. Die Einheit 58 errechnet mit diesen beiden Angaben und mit der Angabe über die Größe des Rechtecks die Koordinate der linken oberen Ecke dieses Rechtecks und gibt diese Koordinate an die Einheit 57 weiter. Damit ist die Groberkennung des menschlichen Gesichts beendet. Die Koordinaten der Punkte dieses Rechtecks werden zur Feinerkennung über eine Leitung 57a an eine Einheit IIG der Fig. 1 weitergegeben.

Mit der Einheit IIG wird der Teil des Videobildes (gemeint ist das Original Videobild wie es auf der Eingangsleitung Ia der Fig. 1 anliegt), der der Gesichtsfläche entspricht, in eine durchnumerierte Anzahl von Regionen zerlegt. Diese Regionen - mathematisch gesprochen einfach zusammenhängende Punktmengen - werden dadurch gefunden, daß bildpunktweise überprüft wird, in welche Klasse von Bildpunktdaten ein Bildpunkt fällt. Die Bildpunktdaten, bestehend aus Luminanzwerten Y und Chrominanzwerten U, V, werden dadurch in Klassen aufgeteilt, daß der dreidimensionale Raum der Vektoren (Y, U, V) in disjunkte Punktmengen, z.B. Würfel, zerlegt wird und alle Bildpunkte, deren Vektoren (Y, U, V) in einen bestimmten dieser Würfel fallen, gehören der gleichen Klasse an. Begonnen wird mit dem obersten linken Bildpunkt, der zur Klasse 1 gehört. Sodann werden dessen Nachbarpunkte abgefragt, ob auch diese zur Klasse 1 gehören, und sofort, bis sich eine einfach zusammenhängende Menge von Punkten ergeben hat, die alle dieser Klasse angehören. Dann wird ein Punkt näher untersucht, der der zweiten Klasse angehört. Mit ihm wird genauso verfahren wie mit dem ersten Bildpunkt. Näheres wird anhand der Fig. 8 erläutert. In der Fig. 8 faßt eine Einheit 74 die Bildpunktdaten Y, U, V zu Vektoren zusammen. Die Luminanzwerte Y sind zuvor von einer Einheit 73 unterabgetastet worden, damit alle drei Angaben an einen einheitlichen Takt angepaßt sind. Ein Indexspeicher 60, in dem alle Punkte des Videobildes mit dem gleichen Index versehen werden, die zur gleichen Region gehören, wird vor Beginn der Analyse eines Bildes auf Null gesetzt. Die Adresse des aktuellen Bildpunktes wird von einem Adreßgenerator 61 erzeugt und der entsprechende Index (Null zu Beginn) wird mit einem Komparator 66 mit Null verglichen. Die Vergleichsnull wird über eine Leitung 66a dem Komparator 66 zugeführt. Hat der Bildpunkt noch keinen Index bekommen, ist also der ausgelesene Index noch Null und gehört der Bildpunkt dem Teil der Bildfläche an, der der Gesichtsfläche entspricht, so öffnet das Ausgangssignal des Komparators 66 das Gatter 67, worauf der von der Einheit 64 abgegebene Farbvektor (Y, U, V) des aktuellen Bildpunktes an Einheiten 68 und 69 übergeben wird. Die Adressen der der Gesichtsfläche entsprechenden Fläche erhält die Einheit 66 über eine Leitung 66b, die mit der Leitung 57a verbunden ist. Der Einheit 68 werden ebenfalls die Anzahl Adressen der zu diesem Bildpunkt acht benachbarten Bildpunkte übergeben, die daraufhin die zugehörigen Farbvektoren produziert. Der Unterschied der Farbvektoren zwischen dem aktuellen Bildpunkt und dessen Nachbarpunkten wird von der Einheit 69 gebildet. Mit Unterschied ist das Quadrat des Differenzvektors gemeint, wobei jedoch die einzelnen Komponenten dieses Vektors noch gewichtet werden. Die verwendeten Gewichte sind 0,2 für die Y-Komponente und 1 für die anderen beiden Komponenten. Durch diese Gewichtung wird der Einfluß von Schatten bei der Zerlegung des Videobildes nach Regionen verringert.

Die Unterschiede, die durch die Einheit 69 erzeugt worden sind, werden dann durch eine Einheit 70 mit einer Schwelle T verglichen, die der Einheit 70 über eine Leitung 70a zugeführt wird. Die Einheit 70 entscheidet dann, ob die Umgebung eines aktuellen Bildpunktes noch zu der gleichen Region gehören wie er selbst. Der nachgeschaltete Zähler 71 zählt die Anzahl der Bildpunkte, die zu einer Region gehören und gibt damit die Größe dieser Region an. Diese Größe ist in einem Speicher 72 gespeichert, und zwar in Verbindung mit der Nummer (Index) dieser Region, die von einem Zähler 59 ebenfalls dem Speicher 72 zugeführt wird. Über eine Leitung 72a werden die Größen der Bereiche weitergeleitet. Der Zähler 59 zählt die Regionen durch. Der Zähler 59 wird um eine Einheit erhöht, wenn der Komparator 70 durch einen Impuls zu verstehen gibt, daß keine Nachbarpunkte des aktuellen Bildpunktes mehr zu der gleichen Region gehören. Wenn ein Nachbarpunkt gefunden worden ist, der zur gleichen Region gehört, wie der aktuelle Bildpunkt, wird dessen Regionsnummer (Index) vom Zähler 59 im Speicher 60 unter seiner Adresse abgespeichert, die von der Einheit 62 ebenfalls an den Speicher 60 übertragen wird.

Die Adressen, die von der Einheit 62 erzeugt werden, werden in der Einheit 63 aufsummiert, um den Schwerpunkt dieser Region zu berechnen. Die Summe der Adressen einer Region wird dann durch einen Teiler 64 durch die Anzahl der Bildpunkte dieser Region dividiert. Die Anzahl der Bildpunkte enthält der Teiler 64 von der Einheit 71. Dieser Schwerpunkt wird dann im Speicher 65 zusammen mit der entsprechenden Regionsnummer (Index) für spätere Verwendung abgespeichert. Die Schwerpunktdaten werden über eine Leitung 65a zur weiteren Verarbeitung zur Verfügung gestellt. Ist jeder Bildpunkt einmal erfaßt worden, befindet sich im Speicher 60 eine Aufteilung aller Bildpunkte in Regionen, deren Nummern auf einer Leitung 60a zur Verfügung gestellt werden.

Die Ergebnisse der Aufteilung nach Regionen, nämlich die Größe der Regionen, die Schwerpunkte der Regionen und die Zuordnung eines Bildpunktes zu einer numerierten Region werden von einer nachgeschalteten Einheit IIH weiterverarbeitet. Mit dieser Einheit IIH wird versucht, drei Regionen zu finden, die den Augen und dem Mund eines menschlichen Gesichts entsprechen. Wie oben schon erwähnt, bleibt die Untersuchung auf die Regionen beschränkt, die innerhalb der Gesichtsfläche liegen, die durch die Groberkennung bestimmt worden ist.

Die Schwerpunkte, die in die Gesichtsfläche fallen, werden zu Tripel zusammengefaßt und dann wird untersucht, ob diese Tripel aufgrund ihrer geometrischen Lage den Augen und dem Mund eines menschlichen Gesichtes entsprechen könnten. Diese Überprüfung macht also von den geometrischen Verhältnissen von Augen und Mund eines menschlichen Gesichtes Gebrauch. Es werden zum Beispiel die Längenverhältnisse der Verbindungen eines Tripels bestimmt und dann geprüft, ob diese Längenvernältnisse mit Modelldaten von Augen und Mund eines Menschen übereinstimmen. Schließlich wird geprüft, wie die Koordinaten aller drei Punkte eines Tripels relativ zur zuvor bestimmten Zentralachse liegen. Ein Tripel, bei dem die vermeintlichen Augen nicht ungefähr die gleiche horizontale Adresse haben, können nicht die Augen eines Menschen sein. Schließlich wird durch die Einheit IIH auch geprüft, ob der farbliche Unterschied jener Bereiche, in denen die beiden Augen liegen sollen, nicht zu groß ist und diese Bereiche daher nicht den Augen eines Menschen entsprechen können. Des weiteren wird untersucht, ob jene Bereiche, die zu den Augen und dem Mund gehören sollen, bewegter sind als andere Bereiche. Schließlich werden alle diese Eigenschaften mit Bewertungsziffernversehen und aus allen bisher ermittelten Tripeln dasjenige ausgewählt, das im Optimum aller Bewertungen liegt. Einzelheiten der Einheit IIH zeigt die Fig. 9.

Einer Vergleichseinheit 75 werden die Bereichsgrößen, die im Speicher 72 gespeichert sind, über eine Leitung 75a, die mit der Leitung 72a verbunden ist, zugeführt. Die Vergleichseinheit vergleicht diese Größen mit einer unteren und einer oberen Schwelle, die dieser Einheit über Leitungen 75b und 75c zugeführt werden. Mit ihr wird geprüft, ob die im Speicher 72 gespeicherten Bereichsgrößen etwa den Bereichen der Augen und des Mundes eines Menschen entsprechen können. Ein Bereich der zwischen diesen beiden Schwellen liegt, könnte zu einem menschlichen Auge oder einem Mund gehören. Typische Werte für die Schwellen sind fünf für die untere und dreißig für die obere Schwelle. Das Gatter 76, das von dem Komparator 75 geöffnet wird, sobald die Größe eines Bereichs zwischen den beiden Schwellen liegt, gibt die Schwerpunktskoordinaten dieses Bereiches, die auf einer Leitung 76a übertragen werden, an einen Komparator 77 weiter. Die Leitung 76a ist mit der Leitung 65a verbunden. Der Komparator 77 prüft, ob die Schwerpunktskoordinaten innerhalb der zuvor bestimmten Gesichtsfläche liegen, deren Kenndaten auf einer Leitung 77a zugeführt werden. Die Leitung 77a ist mit der Leitung 57a verbunden. Nur solche Regionen werden weiterverarbeitet, die innerhalb dieser Fläche liegen. Eine Einheit 78 faßt sämtliche Schwerpunktskoordinaten, die innerhalb dieser Fläche liegen, zu geordneten Tripeln zusammen, die möglicherweise den Augen und dem Mund eines menschlichen Gesichts entsprechen. Jedes dieser Tripel kann durch einen Komparator 79 mit Modelldaten verglichen werden, die in einem Speicher 80 gespeichert sind. Diese Modelldaten ergeben sich aus einem a priori Wissen über das menschliche Gesicht und aus den Parametern, die sich aus der Analyse des Statusbildes ergeben haben. Die Analysedaten werden der Einheit 80 über eine Leitung 80a zugeführt, die mit der Leitung 57a verbunden ist. Die Modellparameter umfassen die Entfernung zwischen den Augen, die Entfernung D4 und D5 zwischen Auge und Mund, den vertikalen Abstand D2 zwischen den Augen, den horizontalen Abstand D1 zwischen den Augen und die Entfernung von der vertikalen Achse zur Farbregion (vgl. hierzu Fig. 10). Die akzeptierten Tripel werden dann an Einheiten 85 bis 93 weitergegeben, die jedes dieser Tripel mit Bewertungsziffern belegen, entsprechend dem Vergleich mit weiter unten angegebenen Eigenschaften.

Die Einheit 85 berechnet und speichert den Schwerpunkt eines Tripels und dessen Abstand von der Zentralachse. Die Daten der Zentralachse werden der Einheit 85 über eine Leitung 85a, die mit der Leitung 51b verbunden ist, zugeführt. Die Einheit 87 berechnet die Gesamtenergie des Differenzbildes innerhalb der Fläche der Regionen, die zu einem Tripel gehören. Dieses Differenzbild wird in der Einheit 83 gebildet und gespeichert. Dazu wird dieser Einheit über eine Leitung 88a das aktuelle Videobild und das in einem Speicher 81 abgespeicherte vorangegangene Bild zugeführt. Die Energieberechnung findet nur innerhalb der Gesichtsfläche statt, deren Begrenzungsdaten über eine Leitung 83a der Einheit 83 zugeführt werden. Die Leitung 83a ist mit der Leitung 57a verbunden. Die Analyse basiert auf der Tatsache, daß Augen und Mund viel und schnell bewegte Regionen des Gesichtes sind. Die Einheit 89 macht Aussagen über die Symmetrieverhältnisse in der Umgebung der Punkte eines akzeptierten Tripels. Diese Umgebung wird einer Einheit 84 über eine Leitung 81a zugeführt. Die Einheit 84 legt ein Rechteck um den Schwerpunkt des vermeintlichen Auges oder des vermeintlichen Mundes und untersucht wie weit diese Region spiegelsymmetrisch zu einer horizontalen Symmetrieachse ist. Ein Maß für diese Symmetrie ist die Summe der Differenzen aller Daten zwischen Originalpunkten und den an einer Achse gespiegelten Punkten dividiert durch die Varianz. Bereiche, wie Augen und Mund, mit hoher symmetrischer Struktur, haben dann einen geringeren Symmetriewert verglichen mit nicht symmetrischen Bereichen oder Bereichen ohne Struktur. Dieses Symmetriemaß - von der Einheit 84 berechnet - wird in der Einheit 89 verwendet, um ebenfalls eine Bewertungsziffer für das aktuelle Tripel zu berechnen. Die Einheit 91 berechnet eine Bewertungsziffer, die die Ähnlichkeit zwischen den Farben der Augenbereiche wiedergibt. Ihr werden die Farbwerte der Augenregionen über eine Leitung 91a, die mit der Leitung 60a verbunden ist, übermittelt, die im Speicher 60 gespeichert sind. Die höchste Bewertung erhalten nur solche Tripel, für die die Bereiche, die den Augen entsprechen sollen, die gleiche Farbe haben.

Die Einheit 93 erzeugt Bewertungsziffern, mit denen die Farbumgebung der Augen und des Mundes bewertet werden. Die Farbe dieser Umgebung wird der Einheit 93 ebenfalls aus dem Speicher 60 zugeführt. Tripel, die als Augen und Mund in Frage kommen, sollten die gleiche farbliche Umgebung haben. Je kleiner die farblichen Unterschiede der Umgebungen sind, desto höher ist die Bewertungsziffer, mit der ein Tripel von der Einheit 93 bewertet wird.

Die Bewertungsziffern aller bisher akzeptierten Tripel, die in den Einheiten 85, 87, 89, 91 und 93 gespeichert sind, werden Normalisierungseinheiten 86, 88, 90, 92 und 94 übertragen und so normiert, daß ihre Werte zwischen Null und Eins liegen. Sie werden dann miteinander multipliziert und zwar durch eine Einheit 95. Eine Einheit 96 bestimmt aus den abgespeicherten Werten dasjenige Tripel, für das diese Werte ein Maximum annehmen. Es speichert die zugehörigen Koordinaten und gibt diese an die in Fig. 1 mit II$_l$ bezeichnete Einheit weiter. Die Einheit II$_l$ ist in Fig. 9 genauer dargestellt. In einer Einheit 97 wird geprüft, ob zwei aufeinander bestimmte optimale Tripel innerhalb gewisser Toleranzgrenzen, die der Einheit 97 über eine Leitung 97a zugeführt werden, übereinstimmen oder nicht. Im bejahenden Fall werden die Daten an eine Einheit 98 weitergegeben, die mit diesen Daten und mit denen über eine Leitung 98a zugeführten Modelldaten diejenigen Punkte des Bildes bestimmt, die zum Gesicht eines Menschen gehören könnten. Die Koordinaten dieser Punkte werden über eine Leitung 98b an einen nicht gezeigten Coder weitergeleitet. Auf die beschriebene Weise wird eine verfeinerte Fläche des Videobildes bestimmt, in der mit sehr großer Wahrscheinlichkeit sich ein menschliches Gesicht befindet.

**Patentansprüche**

1. Schaltungsanordnung zum Erkennen eines menschlichen Gesichts in einer Sequenz von Videobildern mit

    ersten Mitteln (I) zur Bildung eines Differenzbildes zweier in Blöcke strukturierten, aufeinanderfolgenden Videobilder,
    zweiten Mitteln (IIA) zur Überprüfung jedes Differenzbildes, ob die Summe des Betrages oder einer ganzahligen Potenz des Betrages der Bildpunkte eines Blocks über einer ersten Schwelle liegt und ob die Anzahl der Bildpunkte dieses Blocks, deren Betrag oder ganzahlige Potenz des Betrages über einer zweiten Schwelle liegt, eine vorgegebene Anzahl überschreitet, und
    dritten Mitteln (IIB) zur Erzeugung eines aus Statusbits bestehenden Statusbildes aus einem Differenzbild, bei dem ein Statusbit einen ersten Binärwert für jeden Block eines Differenzbildes aufweist, für den die genannte Überprüfung positiv ausgefallen ist, und bei dem ein Statusbit einen zweiten, zum ersten Binärwert inversen Binärwert für jeden Block eines Differenzbildes aufweist, für den die genannte Überprüfung negativ ausgefallen ist,

dadurch gekennzeichnet,

    daß vierte Mittel (IIC) zur Ermittlung der Anzahl der Statusbits mit dem ersten Binärwert einer Zeile oder einer Spalte vorgesehen sind, wobei die ermittelte Anzahl der Statusbits durch eine Merkmalsfunktion Mf(k) darstellbar ist und k eine Zeile oder Spalte angibt,
    daß fünfte Mittel (IID) zur Berechnung eines Faltungsintegrals

$$\sum_{k=1}^{n} Mf(k) \; * \; h(k)$$

    vorgesehen sind, wobei n die Anzahl der Zeilen oder Spalten ist und h(k) eine Hilfsfunktion ist, die so gewählt worden ist, daß das Faltungsintegral einen maximalen Wert annimmt, wenn das Muster der Merkmalsfunktion die größte Ähnlichkeit mit einer menschlichen Silhouette aufweist, und zur Abgabe eines Erkennungssignals vorgesehen sind, wenn der durch das Faltungsintegral gebildete Wert über einer weiteren Schwelle liegt, und
    daß sechste Mittel (IIE, IIF) zur Ermittlung des Schwerpunktes der Statusbits mit dem ersten Binärwert innerhalb jeder Zeile, zur Bestimmung der vertikalen Zentralachse durch Mittelung der Adressen der ermittelten Schwerpunkte, zur Bestimmung der Adresse der ersten Zeile mit einem einen ersten Binärwert aufweisenden Statusbit als oberster Punkt eines Kopfes, der als Spaltenadresse die Adresse der vertikalen Zentralachse erhält, und zur Bildung einer Fläche im Videobild als Gesichtsfläche nach Abgabe eines Erkennungssignals vorgesehen sind.

2. Schaltungsanordnung nach Anspruch 1,
    dadurch gekennzeichnet,

daß erste Filtermittel (13 bis 20; Fig. 3) vorgesehen sind, um das Statusbild in der Weise zu verändern, daß ein Statusbit mit dem ersten Binärwert dann invertiert wird, wenn die Anzahl der benachbarten Statusbits mit dem gleichen Binärwert unter einer vorbestimmten Schranke liegt.

3.  Schaltungsanordnung nach Anspruch 1 oder 2,
    dadurch gekennzeichnet,

    daß Glättungsmittel (21 bis 27; Fig. 4) vorgesehen sind, um das Statusbild in der Weise zu verändern, daß sich einander entsprechende Statusbits von mindestens zwei aufeinanderfolgenden Bildern durch eine ODER-Verknüpfung zu einem neuen Statusbit verknüpft werden.

4.  Schaltungsanordnung nach einem der vorhergehenden Ansprüche,
    dadurch gekennzeichnet,

    daß zweite Filtermittel (28 bis 41; Fig. 5) vorgesehen sind, um das Statusbild in der Weise zu verändern, daß die Anzahl der Statusbits mit dem ersten Binärwert ermittelt und gespeichert wird, die einen zusammenhängenden Bereich bilden,
    daß alle Statusbits eines zusammenhängenden Bereiches die gleiche bereichsabhängige Markierung bekommen,
    daß die ermittelten Anzahlen der Größe nach geordnet werden,
    daß geprüft wird, ob die Größe des zweitgrößten Bereichs unter einem vorbestimmten Bruchteil des größten Bereichs liegt,
    daß im bejahenden Falle die Statusbits des zweiten und aller folgenden Bereiche invertiert werden und im verneinenden Fall ein Gesicht als nicht vorhanden gemeldet wird.

5.  Schaltungsanordnung nach einem der vorhergehenden Ansprüche,
    dadurch gekennzeichnet,
    daß Median-Filtermittel (52; Fig. 7) vorgesehen sind, um die eindimensionale Merkmalsfunktion durch eine Median-Filterung zu glätten.

6.  Schaltungsanordnung nach einem der vorhergehenden Ansprüche,
    dadurch gekennzeichnet,
    daß Mittel (IIG) zur Zerlegung der einer Gesichtsfläche entsprechenden Fläche eines Videobildes in eine durchnumerierte Anzahl von Regionen, und zur Bestimmung der Größe und des Schwerpunktes dieser Regionen vorgesehen sind.

7.  Schaltungsanordnung nach Anspruch 6,
    dadurch gekennzeichnet,
    daß Mittel (IIH) zur jeweiligen Zusammenfassung der auf die Gesichtsfläche fallenden Schwerpunkte zu Tripeln, zur Bestimmung der Entfernungen in einem Tripel und zur vertikalen Zentralachse, zur Überprüfung der Lage aller Schwerpunkte dieses Tripels und der Längenverhältnisse ihrer Verbindungen durch Vergleich mit Modelldaten von Augen und Mund eines Menschen, zur Erzeugung von Bewertungsziffern für Eigenschaften der Punkte um jene Schwerpunkttripel, für die die Überprüfung positiv ausgefallen ist, und zur Auswahl desjenigen Tripels, welches die höchsten Bewertungsziffern aufweist, vorgesehen sind.

8.  Schaltungsanordnung nach Anspruch 7,
    gekennzeichnet durch,

    Mittel (III), die dafür vorgesehen sind, um mindestens zwei nacheinander bestimmte optimale Tripel auf Übereinstimmung innerhalb vorbestimmter Toleranzgrenzen zu überprüfen, und
    um bei Übereinstimmung alle jene Bildpunkte festzulegen, die nach Modellangaben zum Gesicht eines Menschen gehören.

## Claims

1.  A circuit arrangement for recognizing a human face in a sequence of video pictures, comprising

first means (I) for forming a difference picture from two block-structured, consecutive video pictures,
second means (IIA) for investigating each difference picture to check whether the sum of the amount or an integral power of the amount of pixels of a block is located above a first threshold and whether the number of pixels of this block, whose amount or an integral power of the amount is above a second threshold, exceeds a predetermined number, and
third means (IIB) for generating a status picture consisting of status bits from a difference picture, in which a status bit has a first binary value for each block of a difference picture for which said check is positive, and in which a status bit has a second binary value, inverse to the first binary value, for each block of a difference picture for which said check is negative,

characterized in that

fourth means (IIC) are provided for determining the number of status bits having the first binary value in a row or a column, the determined number of status bits being representable by means of a feature function Mf(k) and k indicating a row or column,
in that fifth means (IID) are provided for computing a convolution integral

$$\sum_{k=1}^{n} Mf(k) * h(k)$$

in which n is the number of rows or columns and h(k) is a sub-function which is chosen to be such that the convolution integral assumes a maximum value when the sample of the feature function is most similar to a human silhouette, and are provided for supplying a recognition signal when the value constituted by the convolution integral exceeds a further threshold, and
in that sixth means (IIE, IIF) are provided for determining, within each row, the centre of gravity of the status bits having the first binary value, for determining the vertical centre axis by averaging the addresses of the determined centres of gravity, for determining the addresses of the first row with a status bit having a first binary value as the upper point of a head having the address of the vertical centre axis as the column address, and for forming an area in the video picture as the facial area after supply of a recognition signal.

2. A circuit arrangement as claimed in Claim 1,
   characterized in that
   first filter means (13 to 20; Figure 3) are provided, to change the status picture such a way that a status bit having the first binary value is inverted when the number of adjacent status bits having the same binary value is below a predetermined threshold.

3. A circuit arrangement as claimed in Claim 1 or 2,
   characterized in that
   smoothing means (21 to 27; Figure 4) are provided for changing the status picture in such a way that corresponding status bits of at least two consecutive pictures are combined into one new status bit by a logic OR- operation.

4. A circuit arrangement as claimed in any one of the preceding Claims,
   characterized in that

   second filter means (28 to 41; Figure 5) are provided for changing the status bit in such a way that,
   the number of status bits having the first binary value are determined and stored, which form a coherent area, all the status bits of a coherent area are given the same area-dependent mark, the determined numbers are arranged according to size,
   it is checked, whether the size of the second largest area is below a predetermined fraction of the largest area, if so, the status bits of the second and all subsequent areas are inverted, and if not, an indication is given that a face is not present.

5. A circuit arrangement as claimed in any one of the preceding Claims,
   characterized in that
   median-filter means (52; Figure 7) are provided for smoothing the one-dimensional feature function by means of a median filtering,

6. A circuit arrangement as claimed in any one of the preceding Claims,
<u>characterized in that</u>
means (IIG) are provided for dividing the area of a video picture corresponding to a facial area into a consecutively numbered number of regions, and for determining the size and the centres of gravity of these regions.

7. A circuit arrangement as claimed in Claim 6,
<u>characterized in that</u>
means (IIH) are provided for combining the centres of gravity on the facial areas to triplets, for determining the distances within a triplet and towards the vertical centre axis, for checking the positions of all centres of gravity of these triplet and the length ratios of their connections by comparison with model data of a human being's eyes and mouth, for generating weighting figures for properties of the pixels around those centre of gravity triplets for which the check is positive, and for selecting that triplet which has the highest weighting figures.

8. A circuit arrangement as claimed in Claim 7,
<u>characterized in that</u>

means (III) are provided for checking at least two consecutively determined optimum triplets to see whether they agree within predetermined tolerance limits, and
if there is agreement, for determining all those pixels which in accordance with data belong to a human face.


**Revendications**

1. Circuit de reconnaissance d'un visage humain dans une séquence d'images vidéo avec des premiers moyens (I) pour la formation d'une image différentielle de deux images vidéo successives structurées en bloc,

des deuxièmes moyens (IIA) pour le contrôle de chaque image différentielle pour déterminer si la somme du montant ou une puissance entière du montant des pixels d'un bloc se situe au-delà d'un premier seuil et si le nombre des pixels de ce bloc, dont le montant ou la puissance entière du montant est situé au-delà d'un deuxième seuil, dépasse un nombre prédéterminé, et
des troisièmes moyens (IIB) pour la production d'une image d'état composée de bits d'état à partir d'une image différentielle, un bit d'état présentant une première valeur binaire pour chaque bloc d'une image différentielle pour laquelle le contrôle susmentionné s'est avéré positif et un bit d'état présentant une deuxième valeur binaire inverse de la première valeur binaire pour chaque bloc d'une image différentielle pour laquelle le contrôle susmentionné s'est avéré négatif,

caractérisé en ce que

des quatrièmes moyens (IIC) sont prévus pour la détermination du nombre de bits d'état avec la première valeur binaire d'une ligne ou d'une colonne, le nombre déterminé des bits d'état pouvant être représenté par une fonction caractéristique Mf(k), k désignant une ligne ou une colonne,
des cinquièmes moyens (IID) sont prévus pour le calcul d'une intégrale de convolution

$$\sum_{k=1}^{n} Mf(k) * h(k)$$

n désignant le nombre de lignes ou de colonnes et h(k) étant une fonction accessoire qui est choisie de telle sorte que l'intégrale de convolution adopte une valeur maximale lorsque le schéma de la fonction caractéristique présente une ressemblance maximale lorsque le schéma de la fonction caractéristique présente une ressemblance maximale avec une silhouette humaine, et pour la délivrance d'un signal de reconnaissance lorsque la valeur formée par l'intégrale de convolution est située au-delà d'un seuil supplémentaire, et
que des sixièmes moyens (IIE, IIF) sont prévus pour la détermination du centre de gravité des bits d'état avec la première valeur binaire dans chaque ligne, pour la détermination de l'axe central vertical par calcul de la moyenne des adresses des centres de gravité déterminés, pour la détermination de l'adresse de la première ligne avec un bit d'état présentant une première valeur binaire comme point culminant d'une tête qui reçoit l'adresse de l'axe central vertical comme adresse de colonne, et pour la formation d'une surface dans l'image vidéo comme surface du visage après délivrance d'un signal de reconnaissance.

2. Circuit selon la revendication 1,
caractérisé en ce
que les premiers moyens de filtrage (13 à 20; Fig. 3) sont prévus pour modifier l'image d'état de telle manière qu'un bit d'état soit inversé avec la première valeur binaire lorsque le nombre de bits d'état voisins se situe avec la même valeur binaire sous un seuil prédéterminé.

3. Circuit selon la revendication 1 ou 2,
caractérisé en ce
que les moyens de lissage (21 à 27; Fig. 4) sont prévus pour modifier l'image d'état de telle manière que des bits d'état correspondants d'au moins deux images successives sont reliés par l'intermédiaire d'une liaison OU à un nouveau bit d'état.

4. Circuit selon l'une des revendications précédentes,
caractérisé en ce

que des deuxièmes moyens de filtrage (28 à 41; Fig. 5) sont prévus pour modifier l'image d'état de manière
à déterminer et sauver le nombre de bits d'état avec la première valeur binaire qui forment une zone cohérente,
à obtenir que tous les bits d'état d'une zone cohérente reçoivent le même marquage en fonction de la région;
à classer les nombres déterminés en fonction de leur grandeur;
à vérifier si la grandeur de la deuxième zone la plus grande se situe sous une fraction prédéterminée de la zone la plus grande;
le cas échéant, à inverser les bits d'état de la deuxième zone et de toutes les zones suivantes et, dans la négative, de signaler qu'un visage n'est pas présent.

5. Circuit selon l'une des revendications précédentes,
caractérisé en ce
que des moyens de filtrage médians (52; Fig 7) sont prévus pour lisser la fonction caractéristique unidimensionnelle par un filtrage médian.

6. Circuit selon l'une des revendications précédentes,
caractérisé en ce
que des moyens (IIG) sont prévus pour décomposer la surface correspondant à une surface d'image d'une image vidéo dans un nombre de régions numéroté en continu, et pour déterminer la grandeur et le centre de gravité de ces régions.

7. Circuit selon la revendication 6,
caractérisé en ce
que des moyens (IIH) sont prévus pour regrouper respectivement les centres de gravité situés sur la surface d'image en triplets, pour déterminer l'écartement dans un triplet et par rapport à l'axe vertical, pour vérifier la position de tous les centres de gravité de ce triplet et la longueur de leurs liaisons par comparaison avec des données type des yeux et de la bouche d'un être humain, pour la production de chiffres d'évaluation des propriétés des points autour de chaque triplet de centres de gravité pour lesquels le contrôle s'est avéré positif, et pour la sélection du triplet qui présente les chiffres d'évaluation les plus élevés.

8. Circuit selon la revendication 7,
caractérisé en ce

que des moyens (III) sont prévus pour contrôler au moins deux triplets optimaux déterminés successivement quant à leur concordance dans des limites de tolérance prédéterminées, et
pour déterminer en cas de concordance tous les pixels qui font partie du visage d'un être humain en fonction de données type.

FIG.1

FIG.2

FIG.3

FIG.4

FIG.5

FIG.6

FIG.7

FIG.8

FIG.9

FIG.10